(19) Europäisches Patentamt

European Patent Office

Office européen des brevets

(11) Veröffentlichungsnummer: **0 313 798**
**A2**

(12) **EUROPÄISCHE PATENTANMELDUNG**

(21) Anmeldenummer: **88115286.2**

(22) Anmeldetag: **17.09.88**

(51) Int. Cl.⁴ **H02H 7/08 , A45D 20/10**

(30) Priorität: **24.10.87 DE 3736098**
**01.04.88 DE 3811188**

(43) Veröffentlichungstag der Anmeldung:
**03.05.89 Patentblatt 89/18**

(84) Benannte Vertragsstaaten:
**AT BE CH DE ES FR GB GR IT LI LU NL SE**

(71) Anmelder: **ABC-ELEKTROGERÄTE VOLZ, GMBH & CO.**
**Schöllkopfstrasse 120**
**D-7312 Kirchheim/Teck(DE)**

(72) Erfinder: **Reichle, Heinz**
**Burgtobelweg 16/1**
**D-7318 Lenningen 1(DE)**
Erfinder: **Stotz, Gerhard**
**Frühlingstrasse 6**
**D-7332 Eislingen(DE)**

(74) Vertreter: **Dreiss, Hosenthien & Fuhlendorf**
**Gerokstrasse 6**
**D-7000 Stuttgart 1(DE)**

(54) **Einrichtung zur Drehmomentbegrenzung bei einem Haarbehandlungsgerät.**

㉗ Bei einem Haarbehandlungsgerät mit einem von einem Motor (7) angetriebenen Wickeldorn (1) zum Aufwickeln der Haare, wird zur Drehmomentbegrenzung der von dem Motor (7) aufgenommene Strom durch eine Strombegrenzungsschaltung (29) geführt.

**Fig. 4**

EP 0 313 798 A2

## Einrichtung zur Drehmomentbegrenzung bei einem Haarbehandlungsgerät

Die Erfindung betrifft eine Einrichtung zur Drehmomentbegrenzung bei einem Haarbehandlungsgerät mit einem von einem Motor angetriebenen Wickeldorn zum Aufwickeln der Haare.

Ein derartiges Haarbehandlungsgerät ist aus der EP-B1 0052 325 bekannt. Der Wickeldorn hat eine glatte Oberfläche. Auf ihn wird das Haar aufgewickelt. Gleichzeitig kann es von der Ausströmdüse eines Haartrockners tangential mit erhitzter Luft angeströmt werden. Der Wickeldorn ist mit Öffnungen versehen, an denen eine Unterdruckquelle anliegt, so daß die vom Haartrockner her anströmende heiße Luft durch das Haar hindurch über den Saugluftkanal und die Saugleitung abgesaugt wird. Auf diese Weise erfolgt eine schnelle Entfeuchtung, Trocknung und Formung der auf dem Wickeldorn aufgewickelten Haare.

Die Haare werden von dem sich drehenden Wickeldorn infolge des an den Öffnungen wirksamen Unterdrucks aufgenommen. Wenn die Haare aufgewickelt sind, dreht sich der Wickeldorn weiter. Die sich dann nicht weiter mitdrehenden Haare gleiten auf dem sich drehenden Wickeldorn. Normalerweise ist die Reibungskraft zwischen dem sich drehenden Wickeldorn und den nicht mitdrehenden Haaren so gering, daß die durch die Reibungskraft auf die Haare ausgeübte Zugkraft nicht unangenehm empfunden wird. Im Einzelfall kann es jedoch sein, daß das Drehmoment zu groß wird, so daß das "Ziehen" an den Haaren unangenehm ist. Zu diesem Zweck ist es aus der genannten Druckschrift bekannt, den Wickeldorn über eine Reib- oder Rutschkupplung anzutreiben, so daß, falls je aus irgendeinem Grunde sich das Haar auf dem Wickeldorn festzurrt, mechanisch eine Drehmomentbegrenzung stattfindet.

Diese bekannte Drehmomentbegrenzung arbeitet nicht stets zufriedenstellend. Sie beruht nämlich, wie bereits durch die Begriffe Rutschkupplung bzw. Reibkupplung zum Ausdruck gebracht, darauf, daß zwei Teile bei Überschreiten eines bestimmten Drehmomentes aneinander reiben. Diese Verhältnisse hängen aber äußerst stark von äußeren Faktoren ab, z.B. vom Chemikalien-Gehalt der umgebenden Atmosphäre. Es kann auch mal sein, daß sich Haare in den Saugöffnungen des Wickeldorns verhaken. Die Zugkraft kann auch größer werden, wenn das Haar sehr naß ist. Ferner können besondere Verhältnisse gegeben sein, wenn es sich um langes oder besonders dünnes Haar handelt oder wenn eine Person besonders empfindsam ist.

Es ist demgemäß Aufgabe der vorliegenden Erfindung, eine Einrichtung der eingangs genannten Art derart weiterzubilden, daß das Drehmoment, das von dem Wickeldorn auf das aufgewickelte Haar ausgeübt wird, mit einem besonders hohen Maß an Sicherheit zuverlässig und einfach auf einen bestimmten einstellbaren Wert begrenzt werden kann.

Die Lösung dieser Aufgabe ergibt sich aus Anspruch 1. Vorteilhafte Weiterbildungen der Erfindung sind in den Unteransprüchen definiert.

Die Erfindung beseitigt also die genannten Nachteile des Standes der Technik. Sie nimmt eine elektrische Regelung des Drehmomentes auf einen maximalen Wert vor. Sie macht sich die an sich bekannte Erkenntnis, daß bei ansteigendem Drehmoment der vom Antriebsmotor aufgenommene Strom ansteigt, für diesen speziellen Anwendungsfall zu Nutze und setzt daher eine elektronische Strombegrenzung ein. Damit schafft sie eine sichere Begrenzung des Drehmomentes, das der Wickeldorn auf Haar ausüben kann. Das Drehmoment kann bspw. auf 9 oder 10 Ncm begrenzt werden. Hier etwa liegt bei empfindsamen Person die Schmerzschwelle.

Als Strombegrenzungsschaltelemente können an sich bekannte elektronische Spannungsregler-ICs, z.B. vom Typ SGS 317 T, verwendet werden. Sie basieren darauf, daß bei einem Stromfluß unterhalb des eingestellten Wertes der Spannungsabfall an einem Kontrollanschluß sehr gering ist. Nähert sich der Stromfluß durch das Strombegrenzungsschaltelement einem bestimmten Wert, dann steigt der Spannungsabfall am Kontrollanschluß an und wird zur bausteininternen Regelung eingesetzt. Die Regelung bewirkt auf dem Umweg über die Regelung einer Kontrollspannung, daß der Stromfluß auf einen bestimmten anstellbaren Wert begrenzt wird. Zu diesem Zweck wird an den Kontrollanschluß ein einstellbarer Widerstand, z.B. ein Potentiometer, angeschaltet, mit dessen Hilfe das Drehmoment, bei dem eine Begrenzung eintritt, einstellbar ist.

Um absolut sicher zu gehen, daß das Drehmoment stets begrenzt ist, und zwar auch bei Versagen einer ständig als "Betriebs"-Stufe wirksamen Strombegrenzungsschaltung, ist weiterhin vorgesehen, daß eine zweite Strombegrenzungsschaltung als "Sicherheitsstufe" eingesetzt wird, die in Reihe mit der "Betriebs"-Stufe geschaltet ist. Der Strom, auf den die Sicherheitsstufe eingestellt ist, ist geringfügig höher als der Strom, auf den die Betriebsstufe eingestellt ist. Wenn also aus irgendwelchen Gründen einmal die Betriebsstufe ausfällt, so erfolgt die Regelung auf einem geringfügig höheren Wert durch die Sicherheitsstufe. Dieser Zustand - d.h. : der Ausfall der Betriebsstufe - wird durch eine Anzeigeeinrichtung, vorteilhafterweise durch eine Licht emittierende Diode (LED) angezeigt. Dann weiß die Bedienungsperson, daß eine Wartung zu erfolgen hat. Die optische Anzeige bedeutet, daß das zweite Strombegrenzungsschaltelement zur Regelung aktiviert worden ist, weil das erste Strombegrenzungschaltselement ausgefallen ist.

Um auch Fehlfunktion der Sicherheitsstufe erkennen zu können, ist vorgesehen, daß jedes Mal beim Aufnehmen des Handteils des Haarbehandlungsgerätes aus dem Köcher des feststehenden Geräteteils die Stromversorgung für den Haartrockner eingeschaltet wird und für eine kurze Prüfzeit, ausgelöst durch diesen Schaltvorgang, der Ausgang der Sicherheitsstufe über einen definierten Widerstand kurzfristig an Masse gelegt wird. Dabei wird die an dem Widerstand anfallende Spannung geprüft und, falls sie höher als zulässig ist, d.h. im Falle eines Funktionsfehlers der Sicherheitsstufe, eine Anzeige aktiviert. So wird auch ständig die Sicherheitsstufe überprüft. Als dritte Sicherung - für den Fall eines Ausfalls auch der Sicherheitsstufe - ist noch eine Schmelzsicherung vorgesehen. Schließlich kann man vorteilhafterweise geräteintern einen Testschalter zur Überprüfung von Sicherheits- und Betriebsstufe nach der Montage vorsehen, um jeweils bei Überbrückung der einen Stufe die andere testen zu können.

Ein Ausführungsbeispiel der Erfindung ist am folgenden unter Bezugnahme auf die beigefügten Zeichnungen näher beschrieben. Es stellen dar:

Figur 1 eine schematische Ansicht des Handteils 15 Haarbehandlungsgerätes;

Figur 2 eine Ansicht des Gerätes von vorne zur Erläuterung der Schwenkstellungen der Ausströmdüse 12 des Haartrockners 10, durch die ein Drehrichtungsumschalter 14 stets derart betätigt wird, daß das aufgewickelte Haar tangential angeströmt wird;

Figur 3 eine Ansicht des gesamten Haarbehandlungsgerätes, bestehend aus Handteil 15 und fahrbarem Geräteteil 16;

Figur 4 ein Schaltplan der Ansteuerung des Haarbehandlungsgeräts, einschl. Strombegrenzungsschaltung 29;

Figur 5 ein Schaltplan der Anzeige- und Kontrolleinheit 40.

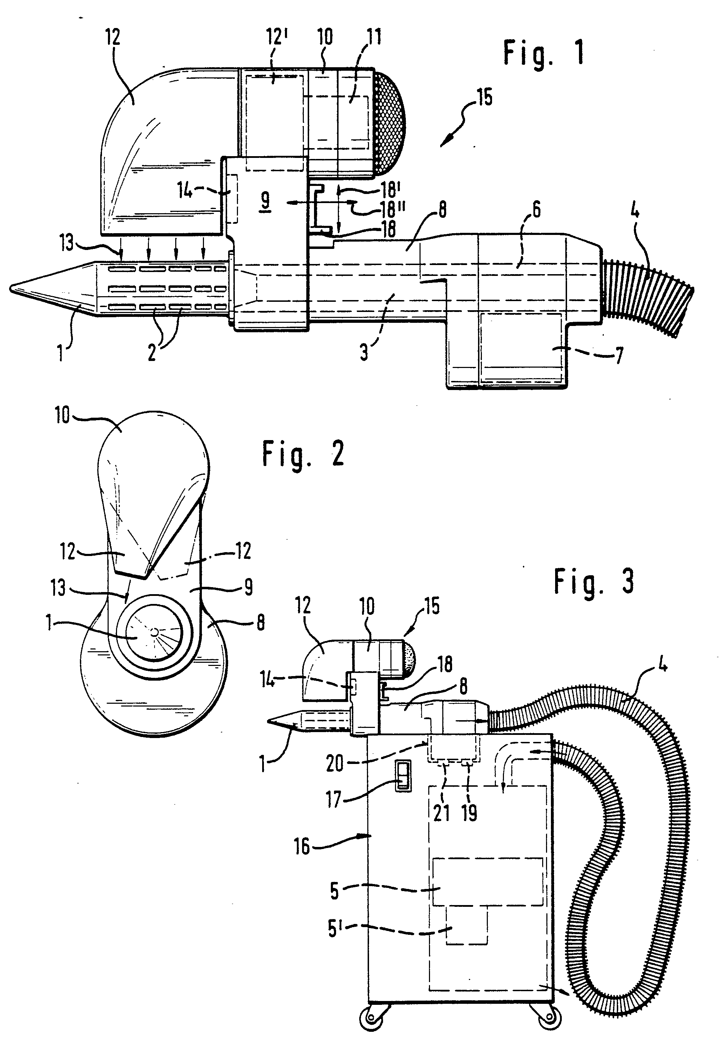

Das Handteil 15 des Haarbehandlungsgeräts besteht nach Fig. 1 aus einem Wickeldorn 1, der hohl ausgebildet und mit Öffnungen 2 versehen ist. Die Öffnungen 2 stehen über einen Saugluftkanal 3 und eine Saugleitung 4 mit einer Unterdruckquelle in Form eines Gebläses 5, angetrieben von einem Motor 5', in Verbindung. Der Wickeldorn 1 steckt in einer drehbar gelagerten Hülse 6, in der auch der Saugluftkanal 3 vorgesehen ist und die von einem Motor 7 angetrieben wird. Der Griff 8, der beim Arbeiten mit dem in diesem Frisiergerät von der Hand der Bedienungsperson erfasst wird, trägt einen Gehäuseteil 9, auf dem ein Haartrockner 10 angeordnet ist. Der Haartrockner 10 wird durch einen von einem Motor 11 angetriebenes Gebläse 12' gebildet. Der Haartrockner 10 weist ferner entsprechende Heizwicklungen auf (nicht gezeigt). Heißluft tritt über eine Ausströmdüse 12 aus und wird dabei rechtwinklig umgelenkt, so daß die Heißluftströmung 13 rechtwinklig aus das Haar auftreffen kann, das aus dem Wickeldorn 1 aufgewickelt ist. Die Ausströmdüse 12 ist in dem Haartrockner 10 schwenkbar angeordnet (vgl. Fig. 2), so daß in beiden Drehrichtungen des Wickeldornes 1 das auf ihn aufgewickelte Haar tangential angeströmt wird. Mit der Schwenkbewegung ist ein Drehrichtungsumschalter 14 gekoppelt, der im Gehäuseteil 9 angeordnet ist. Der Handteil 15 nach Fig. 1 wird herausnehmbar im Köcher 20 des fahrbaren Geräteteils 16 (Fig. 3) abgelegt, in dem auch das Gebläse 5 des Motors 5' vorgesehen ist. Am fahrbaren Geräteteil 16 ist der Hauptschalter 17 vorgesehen. Am Gehäuseteil 9 des Handteils 15 befindet sich eine Mehrfunktionentaste 18, die eine Kippbewegung und eine Auf- und Abbewegung ausführen kann. Die Auf- und Abbewegung 18' dient zum Ein- und Ausschalten des Motors 7 für den Wickeldorn 1; die Kippbewegung 18'' dient zum Ein- bzw. Ausschalten des Haartrockners 10. Im fahrbaren Geräteteil 16 ist ein weiterer Schalter 19 angeordnet, der den Motor 5' für das Gebläse 5 einschaltet, sobald das Handteil 15 aus dem Köcher 20 entnommen wird. Ferner ist ein weiterer Schalter 21 vorgesehen, der ebenfalls einen Stromkreis schließt, sobald das Handteil 15 aus dem Köcher 20 entnommen wird. Dieser Schaltvorgang wird dazu eingesetzt, die Sicherheitsstufe der Drehmomentbegrenzung zu überprüfen.

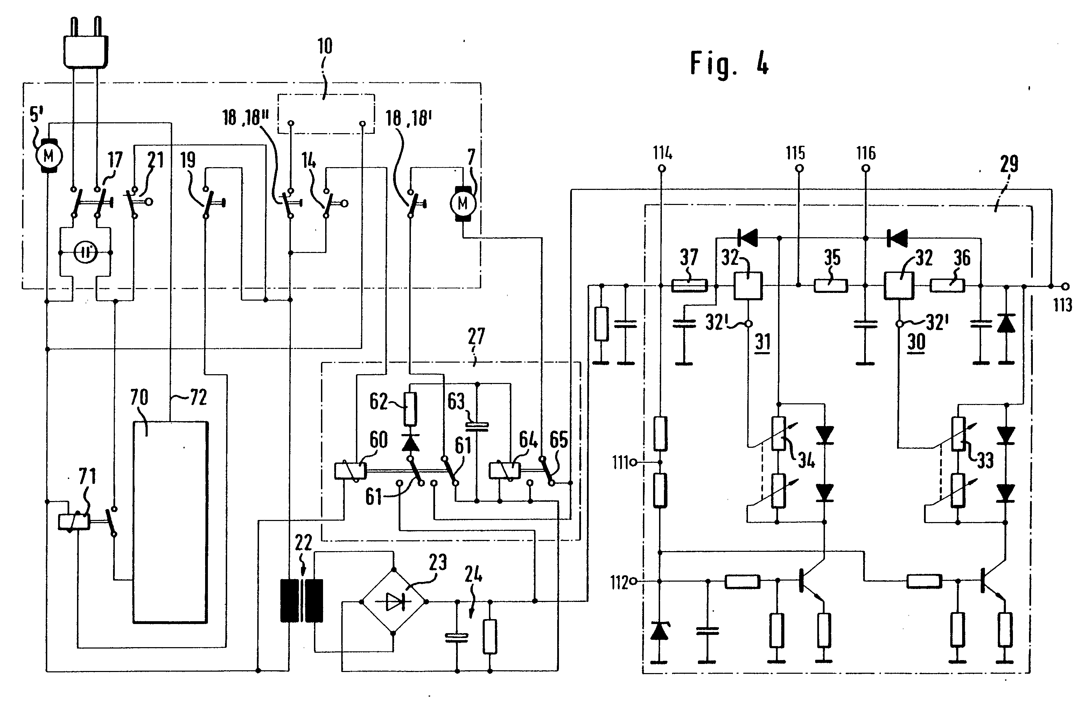

Der Antriebsmotor 7 für den Wickeldorn 1 erhält Strom wie folgt (vgl. Fig. 4): Bei geschlossenem Hauptschalter 17 schließt der Schalter 21, sobald der Handteil 15 aus dem Köcher 20 genommen wird. Damit erhält der Transformator 22 Strom, so daß hinter dem Vierwegegleichrichter 23 und der Glättungsschaltungs 24 eine Gleichspannung zur Verfügung steht. Zur Umschaltung der Polarität, mit der diese Spannung am Motor 7 anliegt, und somit zur Umschaltung der Drehrichtung, in Abhängigkeit von der Stellung des Schalters 14, dient die Umschalteinheit 27. In jeder Umschaltstellung fließt der Strom, der auch durch den Motor 7 fließt, durch die Strombegrenzerschaltung 29 und durch sie auf einem bestimmten Wert gehalten.

Die Strombegrenzungsschaltung 29 weist zwei Stufen auf, nämlich eine Betriebsstufe 30 und eine Sicherheitsstufe 31. Die eigentliche, die Strombegrenzung vornehmende Stufe ist die Betriebsstufe 30; wenn diese ausfällt, übernimmt die Sicherheitsstufe 31 die Strombegrenzung. In der Betriebsstufe 30 ist ein Strombegrenzerschaltelement 32, z.B. ein IC-Baustein des Typs SGS 317 T vorgesehen. Die Einstellung desjenigen Stromwertes, auf den der vom Eingang zum Ausgang fließende Strom begrenzt wird, erfolgt für die Betriebsstufe 30 mittels der mechanisch gekoppelten Doppel-Potentiometer 33, die mit dem Kontrollanschluß 32' verbunden ist. Für die Sicherheitsstufe 31 erfolgt dies mittels der mechanisch gekoppelten Doppel-Potentiometer 34. Die parallel geschalteten Schalt-Dioden dienen der Spannungsstabilisierung über diesen beiden Potentiometern und den nachgeschalteten Trimmern. Über die Widerstände 35 und 36 werden die für die Strombegrenzung maßgeblichen Kontrollspannungen für die Betriebsstufe 30 und die Sicherheitsstufe 31 auf verschiedene Werte eingestellt. Der Stromwert für die Sicherheitsstufe 31 wird etwas höher eingestellt. Der Sicherheitsstufe 31 vorgeschaltet ist eine Schmelzsicherung 37, die durchbrennt und zu einer Stromunterbrechung führt, wenn auch die Sicherheitsstufe 31 versagt.

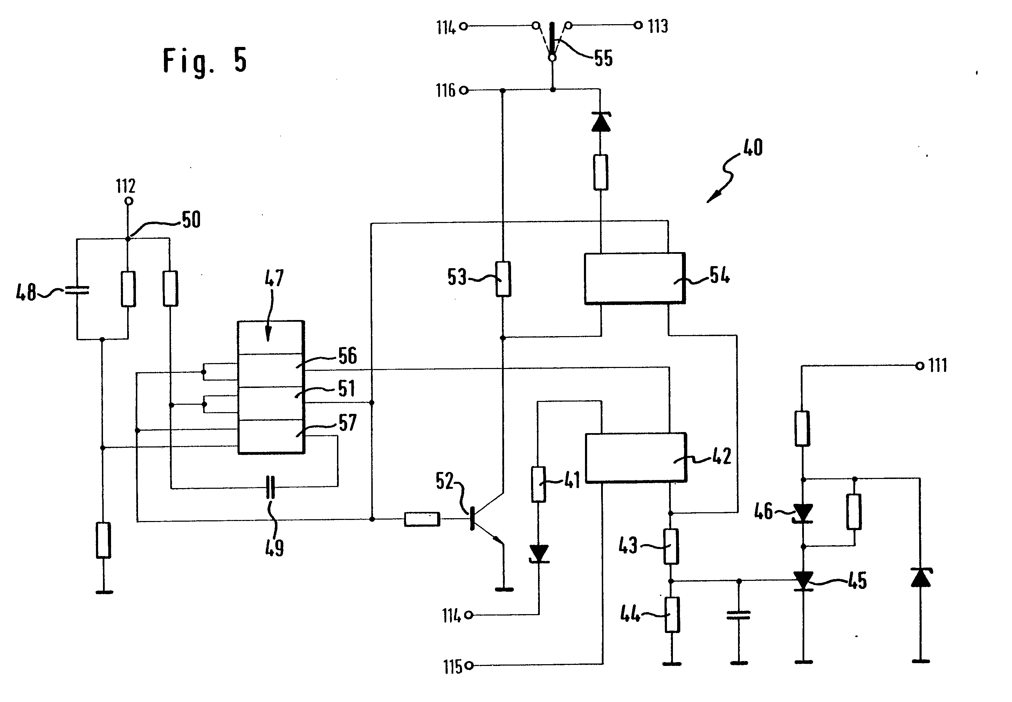

Im Normalfall, d.h. wenn die Regelung von der Betriebsstufe 30 übernommen wird, ist die Sicherheitsstufe 31 "durchgeschaltet", d.h. es entsteht an ihr kein Spannungsabfall. Ist jedoch bei der Betriebsstufe irgendeine Fehlfunktion vorhanden (z.B. Kurzschluß) und übernimmt demgemäß jetzt die Sicherheitsstufe 31 vollständig die Regelung des Stromes, so entsteht an ihr ein Spannungsabfall. Dieser ist zwischen den Klemmen 114 und 115 abgreifbar. Die Spannung zwischen den Klemmen 114 und 115 wird in einer Anzeige- und Kontrolleinheit 40 (vgl. Fig. 5) zur Anzeige gebracht. Diese Spannung führt nämlich zu einem Strom durch den Widerstand 41 und damit auch durch den Optokoppler 42. Über den Optokoppler 42 ergibt sich ein Stromfluß durch die Widerstände 43, 44 und damit ein Einschalten des Thyristors 45. Damit wird die LED-Blinkanzeige 46 eingeschaltet, die über Klemme 111 (vgl. auch die Klemme 111 in Fig. 4) an Spannung liegt. In Folge der Kennlinie des Thyristors bleibt dieser Zustand (Blinkanzeige) auch dann aufrecht erhalten, wenn das Schaltsignal wieder wegfällt.

Um automatisch auch die Sicherheitsstufe 31 in hinreichend kurzen Abständen zu prüfen, ist vorgesehen:

Jedes Mal, wenn man den Handteil 15 aus dem Köcher 20 am fahrbaren Geräteteil 16 herausnimmt, schließt sich erst dadurch (bei bereits eingeschaltetem Hauptschalter 17) der Schalter 21 und legt den Transformator 22 an Spannung. Damit wird jedes Mal, wenn man den Handteil 15, um mit ihm zu arbeiten, in die Hand nimmt, erneut Spannung an der Klemme 28' des Vierweggleichrichters 28 aufgebaut. Ein Teil der entstehenden Spannung wird über die Klemme 112 (vgl. auch Klemme 112 in Fig. 4 und Fig. 5) einer NOR-Schaltung 47 zugeführt, die z.B. aus den digitalen ICs 4001 (vgl. Siemens Bauteileservice, April 1987) aufgebaut ist. Erst, wenn die Kondensatoren 48 und 49 aufgeladen sind, erreicht die Spannung am Punkt 50 ihren endgültigen Wert, der einer logischen "1" an den Eingängen des NOR-Gliedes 51 entspricht und eine "0" am Ausgang zur Folge hat. Dann wird die Basis des npn-Transitors 52 negativ; der Transitor sperrt. Das bedeutet umgekehrt: Nach jedem Herausnehmen des Handteiles 15 des Gerätes bleibt der Transitor 52 für eine kurze Prüfzeit (nämlich: Bis die Basis negativ wird) von ca. 40 ms, die durch die Kapazität der Kondensatoren 48, 49 bestimmt wird, leitend. Während dieser Prüfzeit ist die Klemme 116 (vgl. Klemme 16 in Fig. 4), die zwischen der Sicherheitsstufe 31 und der Betriebsstufe 30 liegt, über den Widerstand 53 an Masse geschaltet. Dann tritt am Widerstand 53 ein definierter Spannungsabfall auf, der zum Stromfluß in den Optokoppler 54 und damit auch zu einem Spannungsabfall am Widerstand 44 führt. Überschreitet diese Spannung die Schaltspannung des Thyristors 45, so wird dieser leitend und führt zu einem Ansprechen der LED-Blinkanzeige 46. Dieser Zustand bleibt auch nach der Prüfzeit erhalten. Bei fehlerhaften (also nicht Strom begrenzender) Funktion der Sicherheitsstufe 30 erfolgt also eine Blink-Daueranzeige, sobald man das Handteil 15 aus dem Köcher 20 nimmt.

Nach Ablauf der Prüfzeit ist der npn-Transistor 52 gesperrt. Der Masseschluß des Widerstandes 53 entfällt. Jetzt übernimmt im "Normal"-Betrieb die Betriebsstufe 30 die Strombegrenzung.

Die Anzeige- und Kontrolleinheit 40 nach Fig. 5 weist einen internen Testschalter 55 auf. Er dient zur Überprüfung der beiden Strombegrenzerstufen 30, 31 nach der Montage vor dem Einbau der Einheit in das Gehäuse. In nach links gekippter Stellung verbindet er die Klemmen 114 und 116 (siehe auch deren Position in Fig. 4). Damit wird die Sicherheitsstufe 31 überbrückt, d.h. kurzgeschlossen. Wird jetzt gleichzeitig kurzfristig der Schalter 21 geschlossen und damit in der beschriebenen Weise der npn-Transitor 52 leitend gemacht, dann ergibt sich am Widerstand 53 ein definierter Spannungsabfall, der bei Überschreiten des zulässigen Wertes zum Schalten des Thyristors 45 und damit zur Einschaltung der LED-Blinkanzeige 45 führt.

Ein Kippen des Testschalters 55 nach rechts führt zur Verbindung der Klemmen 113 und 116 (siehe diese in Fig. 4) und damit zu einer Überbrückung bzw. einem Kurzschluß der Betriebsstufe 30 und somit zu einer Überprüfung der Sicherheitsstufe 31, sofern gleichzeitig ebenfalls wieder der Schalter 21 kurzfristig geschlossen und der Schal-

4

ter 18, 18' geschlossen wird. Der Ablauf ist der im Vorhergehenden geschilderten Situation analog. Nach der Fertigmontage des Gerätes wird der Schalter 55 nicht mehr betätigt.

Die Umschalteinheit 27 (Fig. 4) funktioniert wird folgt: Wird der Drehrichtungsumschalter 14 betätigt, dann zieht das Relais 60 an und schaltet die Arbeitskontakte 61 um. Erst nach einer gewissen Verzögerung, die durch Dimensionierung des Widerstandes 62 und des Kondensators 63 bestimmt ist, zieht das Relais 64 an, so daß dessen Arbeitskontakt 65 von Klemme 25 auf 26 umgelegt wird. Damit ist die Drehrichtung nach kurzem Stillstand umgeschaltet.

Figur 4 zeigt ferner noch die Stromregeleinheit 70 für den Motor 5' des Gebläses 5. Sie wird eingeschaltet. Wenn durch Schließen des Schalters 19 das Relais 71 zum Anziehen gebracht wird, wird die Ausgangsleitung 72 entsprechend aktiviert.

Über das NOR-Glied 56 wird der Optokoppler 42, sowie die Widerstände 43 und 44 während der Prüfzeit nach Schließen des Schalters 21 an positive Spannung gelegt. Das NOR-Glied 57 dient nach Ablauf der Prüfzeit zum Entladen der Kapazität 49.

Sofern einzelne Widerstände, Zener-Dioden u.dgl. nicht besonders angesprochen wurden, haben sie die für den Fachmann in dem vorliegenden Zusammenhang ohne weitere erkennbare normale Funktion.

Bezugszeichenliste

1 Wickeldorn
2 Öffnungen
3 Saugluftkanal
4 Saugleitung
5 Sauggebläse
5' Motor für 5
6 Hülse
7 Motor
8 Griff
9 Gehäuseteil
10 Haartrockner
11 Motor
12 Ausströmdüse
13 Heißluftströmung
14 Drehrichtungsumschalter
15 Handteil
16 fahrbarer Geräteteil
17 Hauptschalter
18 Funktionstaste
19 Schalter
20 Köcher
21 Schalter
22 Transformator
23 Vierweggleichrichter
24 Glättungsschaltung
25,26 Klemmen
27 Umschalteinheit
28 Vierweggleichrichter
29 Strombegrenzungsschaltung
30 Betriebsstufe
31 Sicherheitsstufe
32 Strombegrenzungsschaltelemente
32' Kontrollanschluß von 32
33,34 Doppel-Potentiometer (mechanisch miteinander verbunden)
35,36 Widerstände
37 Schmelzsicherung
40 Anzeige- und Kontrolleinheit
41 Widerstand
42 Optokoppler
43,44 Widerstände
45 Thyristor
46 LED-Blinkanzeige
47 NOR-Schaltung
48,49 Kondensatoren
50 Punkt
51 NOR-Glied
52 npn-Transistor
53 Widerstand
54 Optokoppler
55 Testschalter
56 NOR-Glied
57 NOR-Glied
60 Relais
61 Arbeitskontakt
62 Widerstand
63 Kondensator
64 Relais
65 Arbeitskontakt
70 Stromregeleinheit
71 Relais
72 Anschlußleitung
111 Klemme
112 Klemme
113 Klemme
114 Klemme
115 Klemme
116 Klemme

**Ansprüche**

1. Einrichtung zur Drehmomentbegrenzung bei einem Haarbehandlungsgerät mit einem von einem Motor (7) angetriebenen Wickeldorn (1) zum Aufwickeln der Haare, **dadurch gekennzeichnet,** daß der von dem Motor (7) aufgenommene Strom durch eine Strombegrenzungsschaltung (29) geführt wird, die Schalteinrichtungen (30,31,32) aufweist, die den Strom auf einen bestimmten Wert begrenzen.

2. Schaltung nach Anspruch 1, dadurch gekennzeichnet, daß in der Strombegrenzungsschaltung (29) zwei je ein Strombegrenzungsschaltelement (32) aufweisende Stufen (30,31) vorgesehen sind, von denen die eine als Betriebsstufe (30) auf einen niedrigeren Wert als die erste (31), die als Sicherheitsstufe bei Ausfall der Betriebsstufe (30) dient, eingestellt ist.

3. Schaltung nach Anspruch 1, dadurch gekennzeichnet, daß die Strombegrenzungsschaltung (29) durch mindestens ein Strombegrenzungsschaltelement (32) gebildet wird, dessen maximaler Durchgangsstrom durch Einstellung eines Widerstands (33,34) am Kontrollanschluß (32') einstellbar ist.

4. Schaltung nach Anspruch 3, dadurch gekennzeichnet, daß an dem Kontrollanschluß (32') des Strombegrenzungsschaltelementes (32) eine Reihenschaltung mehrerer Widerstände vorgesehen ist, von denen mindestens einer (33,34) ein einstellbares Potentiometer ist.

5. Schaltung nach Anspruch 1 oder einem der folgenden, dadurch gekennzeichnet, daß aus der Spannung am Eingang (16) der Betriebsstufe (30) der Strombegrenzungsschaltung (29) ein Signal abgeleitet wird, das am Schalteingang eines Thyristors (45) anliegt und diesen bei Überschreiten eines bestimmten Schwellwertes in leitenden Zustand schaltet, und daß dadurch ein Anzeigeelement (46) in einen eine Störung anzeigenden Zustand gebracht wird.

6. Schaltung nach Anspruch 5, dadurch gekennzeichnet, daß das Anzeigeelement eine LED-Blinkanzeige (46) ist.

7. Schaltung nach Anspruch 5, dadurch gekennzeichnet, daß die Ableitung des am Schalteingang des Thyristors (45) anliegenden Signals aus der Spannung am Eingang (116) der Betriebsstufe (30) unter Zwischenschaltung eines Optokopplers (54) erfolgt.

8. Schaltung nach Anspruch 1, dadurch gekennzeichnet, daß der zu handhabende Handteil (15) des Haarbehandlungsgerätes im Ruhezustand im Geräteteil (16) auf einer Auflage (20) aufliegt, und daß dadurch ein Schalter (21) offengehalten wird, der bei Abheben des Handteils (25) schließt und die Stromversorgung des Motors (7) für den Wickeldorn (1) einschaltet und dabei für die Dauer einer Prüfzeit eine Schaltung (52,53,54) aktiviert, die bei Störung der Sicherheitsstufe (30) ein Anzeigeelement (45,46) in einen eine Störung anzeigenden Zustand bringt.

9. Schaltung nach Anspruch 8, dadurch gekennzeichnet, daß die genannte Schaltung einen Transitor (52), in Reihe geschaltet mit einem Widerstand (53), zur Ableitung einer Prüfspannung aufweist, und daß bei Einschalten des Schalters (21) für die Stromversorgung des Motors (7) der Transistor (52) kurzzeitig mit in leitenden Zustand gebracht wird.

10. Schaltung nach Anspruch 9, dadurch gekennzeichnet, daß die Basis des genannten Transistors (52) durch Zwischenschaltung eines durch eine Widerstand und eine Kapazität (48,49) gebildeten R/C-Gliedes kurzzeitig mit einer Steuerspannung beaufschlagt wird, durch die der Transistor in leitenden Zustand gebracht wird.

11. Schaltung nach Anspruch 2, dadurch gekennzeichnet, daß ein Testschalter (55) vorgesehen ist, durch den die Sicherheitsstufe (31) durch Verbindung von deren Eingang (114) und Ausgang (115) überbrückt werden kann.

12. Schaltung nach Anspruch 11, dadurch gekennzeichnet, daß mit dem Testschalter (55) zur Überprüfung der Sicherheitsstufe (31) die Betriebsstufe durch Verbindung von deren Eingang (116) und Ausgang (113) überbrückt werden kann.

13. Schaltung nach Anspruch 1, dadurch gekennzeichnet, daß Betriebsstufe (30) und Sicherheitsstufe (31) mittels eines Vierweggleichrichters (28) in den Stromweg des Antriebsmotors (17) eingeschaltet sind.

Fig. 1

Fig. 2

Fig. 3

Fig. 4

Fig. 5

EP 0 313 798 A2